# EUROPÄISCHE PATENTSCHRIFT

(11) **EP 2 267 178 B1**
(45) Veröffentlichungstag und Bekanntmachung des Hinweises auf die Patenterteilung: **23.10.2013**
(21) Anmeldenummer: 10167055.2
(22) Anmeldetag: 23.06.2010
(51) Int. Cl.: C23C 4/02, B23P 9/00

(54) **Verfahren zum Aufrauhen von Metalloberflächen**
Method for keying metal surfaces
Procédé destiné à rendre rugueuses des surfaces métalliques

(30) Priorität: 25.06.2009 DE 102009027200
(43) Veröffentlichungstag der Anmeldung: 29.12.2010
(73) Patentinhaber: Ford Global Technologies, LLC, Dearborn, MI 48126 (US)
(72) Erfinder: Dr. Dörfler, Thomas, 50735, Köln (DE); Verpoort, Clemens Maria, 40789, Monheim (DE)
(74) Vertreter: Drömer, Hans-Carsten

(56) Entgegenhaltungen:
- EP-A1- 1 854 903
- EP-A2- 0 919 715
- WO-A1-2006/061710
- WO-A1-2007/087989
- DE-A1-102008 022 225
- DE-A1-102008 024 313
- DE-A1-102008 058 452
- DE-B3-102006 045 275
- DE-U1-202009 014 180

## Beschreibung

Die Erfindung betrifft ein Verfahren zum Aufrauhen von Metalloberflächen zur Haftverbesserung von hierauf thermisch gespritzten Schichten nach dem Oberbegriff des Anspruchs 1.

Aus der WO 2007087989 A1 ist ein Verfahren zum Aufrauhen von Metalloberflächen zur Haftverbesserung von hierauf thermisch gespritzten Schichten bekannt, bei dem in einem ersten Verfahrensschritt gleichförmige Nuten, z. B. Rechteck- oder Trapeznuten, in die Metalloberfläche eingebracht werden. In einem zweiten Verfahrenschritt werden die Nutenstege plastisch verformt, um Hinterschnitte entlang der Nutenstege auszubilden. Nachteilig ist, daß die Nutenstege über ihre gesamte Länge plastisch verformt werden. Dies erfordert einen relativ hohen Kraftaufwand, wobei die Form der Hinterschnitte nur schwierig konstant zu realisieren ist. Weiterhin ist durch die Ausbildung der Hinterschnitte über die gesamte Länge der Nuten die vollständige Füllung der Nuten durch das Spritzmaterial nur bedingt gewährleistet, da die benachbarten Hinterschnitte eine Engstelle bilden, durch die das Spritzmaterial nur unvollständig in eine Nut eindringen kann.

EP 0919715 A ist ein Verfahren zum Aufrauhen vom Metalloberflächen wobei eingebrachte Nuten plastisch verformt werden um Hinterschnitte zu bilden.

Aufgabe der Erfindung ist es deshalb, die bekannten Verfahren zum Aufrauhen so zu verbessern, daß die plastische Verformung der Nutenstege zur Bildung der Hinterschnitte mit wenig Kraftaufwand erfolgen kann, weiterhin eine gleichmäßige Ausbildung der Hinterschnitte möglich ist und die Hinterschnitte so gestaltet sind, daß eine möglichst vollständige Füllung der Nuten mit Spritzmaterial gewährleistet ist.

Gelöst wird diese Aufgabe mit den Merkmalen des Anspruchs 1.

Indem der Grad der plastischen Verformung der Nutenstege in Längsrichtung der Nuten sich regelmäßig ändert, lassen sich gezielt in regelmäßigen Abschnitten die Hinterschnitte in die Nutenstege einbringen. Dazu werden die Nutenstege durch geeignete Werkzeuge jeweils lokal so verformt, daß diese Hinterschnitte entstehen. In Längsrichtung der Nuten gesehen führt dies zu einer ständigen, aber regelmäßigen Änderung der Form der Hinterschnitte. Dabei können auch die Hinterschnitte teilweise gar nicht auftreten, weil stellenweise der Grad der plastischen Verformung nur gering ist oder gar keine plastische Verformung vorhanden ist.

Aufgrund dieser regelmäßigen Änderung der Nutenform können die dann regelmäßig auftretenden Hinterschnitte mit relativ wenig Kraftaufwand in die Nutenstege eingebracht werden, da insgesamt nur eine geringe plastische Verformung der Nutenstege erforderlich ist. Weiterhin können die Hinterschnitte mit großer Genauigkeit eingebracht werden. Damit entstehen diese regelmäßig entlang der Nuten mit den immer gleichen Abmessungen. Dies ist für eine gleichmäßige Haftfestigkeit der späteren Spritzschicht von großem Vorteil. Weiterhin vorteilhaft ist, daß das aufzubringende Spritzmaterial sehr gut die Nuten auffüllen kann, da diese regelmäßig keine oder zumindest kleinere Hinterschnitte aufweisen. In diesen Bereichen dringt das Spritzmaterial sehr gut in jede Nut ein und kann dann die direkt benachbarten Nutbereiche mit den Hinterschnitten leicht ausfüllen.

In einer vorteilhaften Ausführung sind die plastischen Verformungen Rändel auf der Oberseite der Nutenstege. Dazu wird mit einem bekannten Rändelwerkzeug entlang der Nut gefahren. Damit entstehen, je nach Form des Rändelwerkzeuges, die gleichmäßigen plastischen Verformungen entsprechend der Rillenform des Rändelwerkzeuges.

In einer weiteren Ausführung sind die plastischen Verformungen lokale Eindrückungen auf der Oberseite der Nutenstege. Dies kann durch eine Walze, die entsprechende Vorsprünge, Spitzen oder Nadeln aufweist, eingebracht werden.

In beiden Fällen werden die Hinterschnitte erzeugt, indem die Nut auf der Oberseite so stark gedrückt wird, daß die Nut plastisch eingedrückt wird und die daraufhin die Nutflanken sich plastisch zur Seite - quer zur Nutlängsrichtung - verformen.

In einer anderen vorteilhaften Ausgestaltung sind die plastischen Verformungen lokale Einstemmungen in den Nutenstegen quer zur Nutenrichtung. Dies kann erfolgen, indem eine Walze in der Nut läuft, die am radialen Umfang regelmäßige Vorsprünge, Spitzen oder Absätze aufweist, die eine Verformung der Nut quer zu Nutlängsrichtung bewirken. Die Nut wird dann quer zu Ihrer Längsrichtung plastisch umgebogen. Da im Nutenfuß die Nutenstege unverformt bleiben, werden die Nutenstege mit zunehmender Höhe stärker in Querrichtung verformt, quasi geneigt, wodurch die Hinterschnitte in den Nuten entstehen.

Vorteilhaft können die plastischen Verformungen lokale Eindrückungen der Nutenstegkanten sein. Dies läßt sich bewerkstelligen, indem die Nutenstegkanten in regelmäßigen Abständen entsprechend eingedrückt oder gequetscht werden, wodurch an den Nutflanken die Hinterschnitte entstehen.

Ein Werkzeug zum Einbringen der plastischen Verformungen kann zumindest einen Stempel aufweisen. Vorteilhaft ist dieser Stempel zyklisch beweglich. Wenn das Werkzeug über die Nuten geführt wird, erzeugt der sich bewegende Stempel die entsprechenden plastischen Verformungen der Nutenstege. Dabei kann der Stempel einen entsprechend geformten Stempelkopf aufweisen und der Stempel kann in jede geeignete Richtung auf die Nuten angreifen, um die optimale Form von Hinterschnitten an den Nutenstegen zu erzeugen. Z. B. kann der Stempel direkt senkrecht auf die Oberseite der Nutenstege wirken, wodurch die Nutenstege von oben gedrückt werden und dadurch das Nutenstegmaterial in Querrichtung fließt. Der Stempel kann aber auch in Querrichtung zu den Nuten unter einem flachen Winkel wirken, wodurch die Nutenstege quer zu ihrer Längsrichtung verformt werden.

Vorteilhaft ist ein Werkzeug zur Einbringung der plastischen Verformungen in einer Nut geführt. Damit kann das Werkzeug immer genau zu den Nutenstegen ausgerichtet und nur einer der benachbarten Nutenstege bearbeitet werden. Indem das Werkzeug an oder in den Nuten geführt ist, erfolgt die Verformung der Nutenstege immer relativ zur Nut und kann damit mit hoher Genauigkeit und Wiederholbarkeit erfolgen.

Besonders vorteilhaft ist es, wenn die plastischen Verformungen des zweiten Verfahrensschrittes im gleichen Arbeitsgang wie der erste Verfahrensschritt eingebracht werden. Z. B. kann bei einem Dreh-, Bohr- oder Fräswerkzeug im Nachgang ein Werkzeug zur plastischen Verformung angeordnet werden. Vorteilhaft werden dabei die Werkzeuge für den ersten und zweiten Verfahrenschritt auf den gleichen Werkzeugträger, z. B. einer Fräs- oder Drehspindel, montiert. Erster und zweiter Verfahrensschritt erfolgen damit quasi gleichzeitig bzw. kurz hintereinander. Neben der Zeitersparnis - es ist kein weiterer Arbeitsgang notwendig - reduziert sich auch der Meß- oder Einrichtungsaufwand für den zweiten Verfahrensschritt. Beide Werkzeuge sind unmittelbar aneinander gekoppelt und müssen nur einmal zueinander ausgerichtet werden.

Die beschriebenen Verfahren zur Herstellung der plastischen Verformungen und der Hinterschnitte können in geeigneter Weise kombiniert werden. Beispielsweise können sich plastische Eindrückungen von oben mit Eindrückungen in Querrichtung und/oder Verformungen der Nutflanken abwechseln. Ein Werkzeug kann verschiedene und/oder eine Mischung bzw. Überlagerung der genannten plastischen Verformungen einbringen. Es können auch mehrere Werkzeuge zur Durchführung des zweiten Verfahrensschrittes in geeigneter Weise kombiniert werden, um möglichst günstige Hinterschnitte zu erzeugen.

Besonders geeignet ist dieses Verfahren zur Bearbeitung und Vorbereitung der Beschichtung von Zylinderblöcken von Brennkraftmaschinen. In der relativ kleinen Zylinderbohrung ist das Verfahren gut anwendbar, da mit geringem Kraftaufwand zuverlässig sehr gleichmäßig die erforderlichen Hinterschnitte in die Nutenstege eingebracht werden können.

Weitere vorteilhafte Ausführungen der Erfindung sind in den Zeichnungen dargestellt. Es zeigen:
- Fig. 1: einen Schnitt durch ein Werkstück mit zwei Werkzeugen zur Durchführung des Verfahrens;
- Fig. 2: eine Draufsicht auf die Anordnung aus Figur 1;
- Fig. 3: den vergrößerten Ausschnitt A aus Figur 1;
- Fig. 4a- d: Schnitte durch verschieden verformte Nutenstege;
- Fig. 5a-d: perspektivische Ansichten der verformten Nutenstege aus Fig. 4;
- Fig. 6a, b: Seitenansicht und Schnitt einer Walze für Eindrückungen;
- Fig. 7a, b: Seitenansicht und Schnitt einer Walze für Nutstegkantenverformungen;
- Fig. 8a, b, c: Seitenansicht und Schnitte einer Walze für Querverformungen;
- Fig. 9a, b: Seitenansicht und Schnitt eines Stempelwerkzeuges für Nutstegkantenverformungen;
- Fig. 10a, b, c: Schnitt und Draufsichten eines Stempelwerkzeuges für Querverformungen; und
- Fig. 11 a, b, c: Schnitt und Draufsicht einer Doppelwalze für Querverformungen.

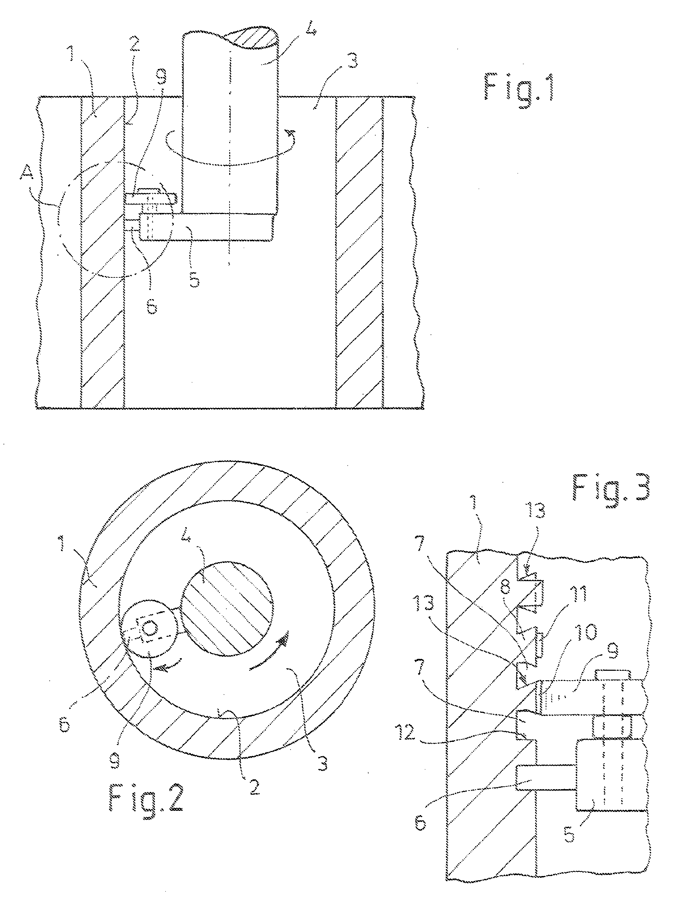

In den Figuren 1 bis 3 ist eine Anordnung zur Durchführung des erfinderischen Verfahrens gezeigt, wobei Figur 1 den Schnitt durch das Werkstück und Figur 2 die Draufsicht zeigt. Figur 3 zeigt den vergrößerten Ausschnitt A aus Figur 1. Das Werkstück, ein Zylinderblock 1, weist eine Metalloberfläche 2 auf, die mittels des Verfahrens vorbereitet wird, um eine Spritzschicht auftragen zu können. Auf einer Werkzeugspindel 4 ist ein Werkzeughalter 5 befestigt, der einen Drehmeißel 6 trägt. Indem die Werkzeugspindel 4 sich dreht und langsam nach unten in die Zylinderbohrung 3 einfährt, erzeugt der Drehmeißel 6 in der Metalloberfläche 2 die in Umfangsrichtung verlaufende Nuten 7 mit den dazwischen angeordneten Nutenstegen 8.

Auf dem Werkzeughalter 5 ist eine drehbare Rändelwalze 9 angeordnet, die auf die Nutenstege 8 wirkt, indem am Umfang regelmäßige Vorsprünge 10 angeordnet sind, die wenn sich die Drehspindel 4 dreht, in regelmäßigen Abständen die Nutenstege 8 plastisch in Form von Rändel bzw. Rillen 11 verformen. Diese Rillen 11 wiederum erzeugen an den Nutflanken 12 der Nutenstege 8 die Hinterschnitte 13.

Die Rändelwalze 9 ist gegenüber dem Drehmeißel 6 axial - in axialer Bewegungsrichtung der Drehspindel gesehen - zurückversetzt, wodurch die Rändelwalze 9 immer nur mit einem gerade entstandenen Nutensteg 8 zusammenwirkt.

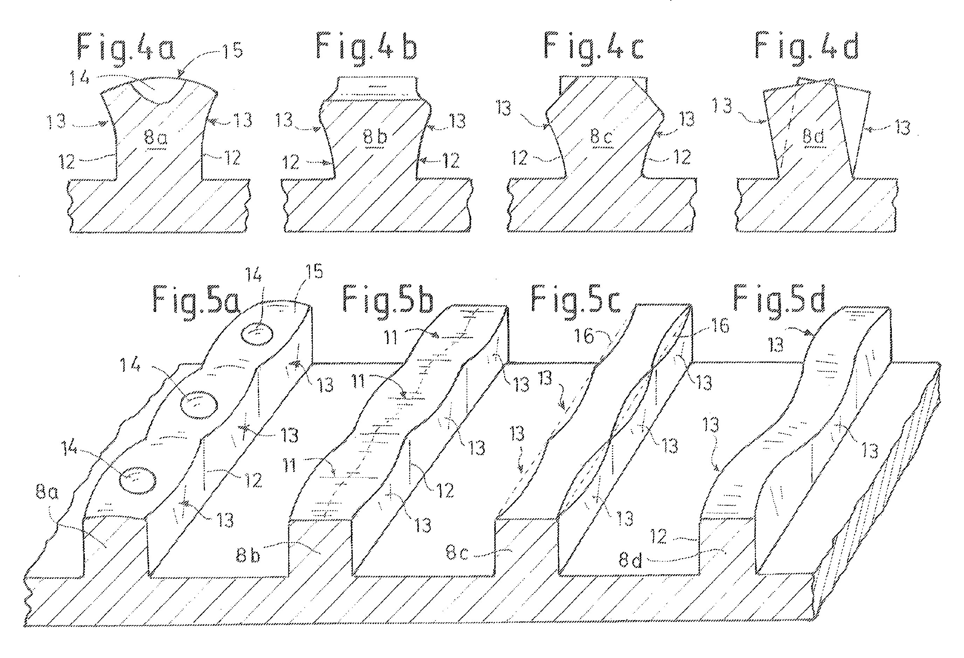

In den Fig. 4a bis 4d sind Schnitte durch verschieden verformte Nutenstege und in den Fig. 5a bis 5d die dazugehörigen perspektivischen Ansichten dargestellt.

In den Figuren 4a, 5a ist die plastische Verformung eines Nutensteges 8a gezeigt, in den regelmäßige mittige Eindrückungen 14 auf seiner Oberseite 15 eingebracht sind. Die Eindrückungen 14 führen zu plastischen Verformungen, wodurch an den Nutflanken 12 die regelmäßigen Hinterschnitte 13 ausgebildet. Regelmäßig bedeutet hier, daß die Eindrückungen bzw. Hinterschnitte in Längsrichtung der Nuten gesehen, in immer etwa gleichen Abständen auftreten.

In den Figuren 4b, 5b sind plastische Verformungen eines Nutensteges 8b gezeigt, die durch eine Rändelwalze entstehen, wie es auch schon in Figur 3 dargestellt war. Die entstehenden Vertiefungen bzw. Rändel oder Rillen 11 führen zu einer plastischen Verformung des Nutenstegmaterials in Querrichtung zu den Nuten, wodurch die Hinterschnitte 13 gebildet werden.

In den Figuren 4c, 5c sind die plastischen Verformungen der Nutenstegkanten 16 gezeigt. Indem die Nutenstegkanten 16 regelmäßig eingedrückt sind, bilden sich die regelmäßigen Hinterschnitte 13 aus.

In den Figuren 4d, 5d sind die plastischen Verformungen des Nutenstegs 8d selbst gezeigt, indem dieser in Querrichtung zur Nutenlängsrichtung regelmäßig und abwechselnd in die eine und die andere Richtung zur Seite gebogen ist. Dadurch bilden sich - in Nutenlängsrichtung gesehen - abwechselnd die Hinterschnitte 13 an den Nutflanken 12 aus.

Verschiedene Werkzeuge zur Erzeugung der erfinderischen Nutenstege sind in den folgenden Figuren gezeigt. Diese Werkzeuge können auch miteinander kombiniert werden, so daß verschiedene Verformungen durch ein Werkzeug erzeugt werden, es können aber auch mehrere dieser Werkzeuge neben- oder nacheinander angeordnet sein, um verschiedene plastische Verformungen zu erzielen.

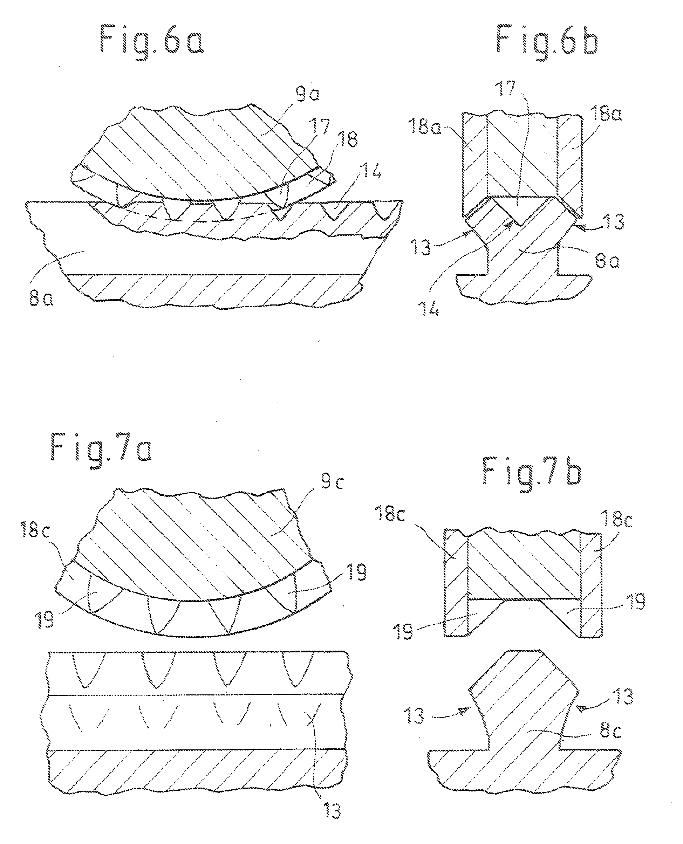

In den Figuren 6a und 6b ist eine Walze 9a gezeigt, mit der Eindrückungen 14 in die Oberseite 15 eines Nutensteges 8 eingebracht werden können. Die Walze 9a ist in Figur 6a in ihrer Mittelebene geschnitten. Figur 6b zeigt den Schnitt A-A aus Figur 6a. Am äußeren Umfang der Walze 9a sind in regelmäßigem Abstand Kegelspitzen 17 angeformt. Wenn die Walze 9a auf der Oberseite 15 eines Nutensteges 8a in Nutenrichtung abrollt, formen sich die Eindrückungen 14 als plastische Verformungen im Nutensteg 8a aus und bilden die bereits in Figur 3a und 4a beschriebenen Hinterschnitte 13. Die Walze 9a wird am Nutensteg 8a über zwei seitlich an der Walze 9a angeordnete, radial überstehende Leitscheiben 18a geführt. Somit zentriert sich die Walze 9a von selbst auf die Mitte des Nutensteges 8a und es ist gewährleistet, daß die Eindrückungen 14 immer genau mittig in der Oberseite 15 erfolgen. Damit die Leitscheiben 18a sich nicht mit dem plastisch verformten Nutensteg 8 im Bereich der Eindrückungen 14 verklemmt, sind die Leitscheiben 18a im Bereich der Kegelspitzen 17 radial und axial ausgespart.

In den Figuren 7a und 7b ist eine Walze 9c gezeigt, mit der Nutstegkanten 16 plastisch umgeformt werden. Die Walze 9c ist in Figur 7c in ihrer Mittelebene geschnitten. Figur 7b zeigt den Schnitt B-B aus Figur 7a. Auch die Walze 9c wird am Nutensteg 8c über zwei seitlich an der Walze 9c angeordnete, radial überstehende Leitscheiben 18c geführt. Am äußeren Umfang der Walze 9c sind in regelmäßigem Abstand dreieckige Absätze 19 am Umfang angeformt. Sinnvollerweise sind Leitscheiben 18c und Walze 9c einstückig ausgeführt, damit die Absätze eine höhere Festigkeit erhalten. Rollt die Walze 9c auf der Oberseite 15 eines Nutensteges 8a in Nutenrichtung ab, werden die Nutenstegkanten 16 in regelmäßigen Abständen plastisch verformt. Diese Verformungen sind Eindrückungen oder Quetschungen des Nutenstegs 8c and den Nutenstegkanten 16, wodurch sich die bereits in Figur 3c und 4c beschriebenen Hinterschnitte 13 ausbilden.

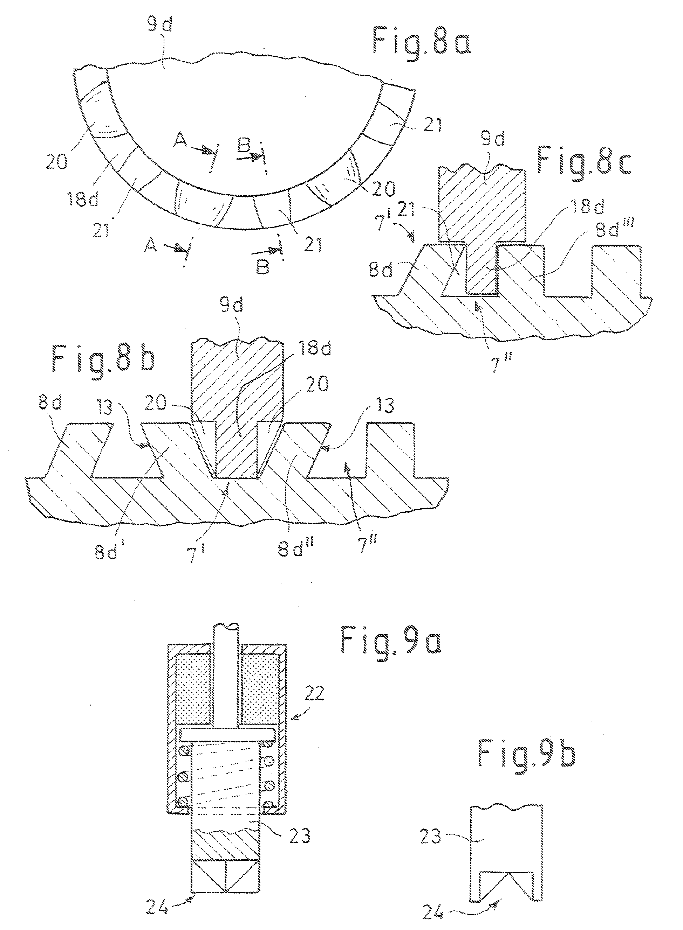

In Figur 8a ist eine Walze 9d in Seitenansicht gezeigt, mit der die Nutenstege 8d in Querrichtung plastisch verformt werden können. In Figur 8b ist der Schnitt A-A, in Figur 8c der Schnitt B-B aus Figur 8a dargestellt. Die Walze 9d weist eine zentrische, in die Walze 9d integrierte Leitscheibe 18d auf, die in einer Nut 7' geführt ist. In regelmäßigen Abständen weist die Leitscheibe 18d konische Vorsprünge 20 auf, die am äußeren Umfang beginnen, also dort noch nicht vorhanden sind, und die dann zur Drehachse der Walze 9d - radial nach innen - zunehmen. Rollt die Walze 9d, geführt durch die Leitscheibe 18d, in einer Nut 7 ab, führen die konischen Vorsprünge 20 zu einer regelmäßigen plastischen Verformung der Nutenstege 8d derart, das diese im Bereich der Vorsprünge 20 zur Seite gebogen werden, wodurch die Hinterschnitte 13 entstehen.

Damit ein Nutensteg 8d sowohl nach rechts als auch nach links gebogen wird, ist es notwendig, daß wenn die Walze 9d in der der Nut 7' benachbarten Nut 7" geführt ist, der Nutensteg 8d von den Vorsprüngen 20 auf der anderen Seite der Walze 9d in entsprechend andere Richtung verformt wird. Dies ist ersichtlich aus Figur 8b, wo die Walze 9d in der ersten Nut 7' geführt ist und den Nutensteg 8d' nach links und den Nutensteg 8d" nach rechts biegt. In Figur 8c durchläuft die Walze 9d die zur Nut 7' benachbarte Nut 7" und verformt entsprechend den Nutensteg 8d" nach links und den Nutensteg 8d"' nach rechts. Damit dieses Umbiegen nach rechts und links in einem Nutensteg abwechselnd erfolgt, ist die Drehung der Walze 9d zwischen den Nuten 7' und 7" abgestimmt. Dies erfolgt, indem die Leitscheibe 18d im Bereich zwischen zwei Vorsprüngen 20 immer eine Ausnehmung 21 aufweist, die mit dem nach rechts umgebogenen Nutsteg 8d" korrespondiert. Damit kann der rechte Absatz 20' den Nutsteg 8d" immer nur zwischen zwei Biegungen des Nutensteges 8d" nach rechts die Biegung des Nutensteges 8d" nach links bewirken.

In Figur 9a ist der Schnitt durch ein Stempelwerkzeug 22 für die plastische Verformung der (nicht dargestellten) Nutstegkanten 16 gezeigt. Ein Stempel 23 ist federelastisch im Stempelwerkzeug 22 gelagert und fährt periodisch aus, wenn sich das Stempelwerkzeug 22 entlang eines Nutensteges 8 bewegt. Die Stempelbewegung kann durch jeden geeigneten Aktuator erzeugt werden, oder auch mechanisch durch Nockenscheiben, die z. B. an der Drehspindel angeordnet sind. Der Stempelkopf 24 weist die Negativform für die plastische Verformung auf, die der Stempel auf die Nutenstegkanten 16 aufbringen soll. Figur 9b zeigt die Vorderansicht des Stempelkopfes 24.

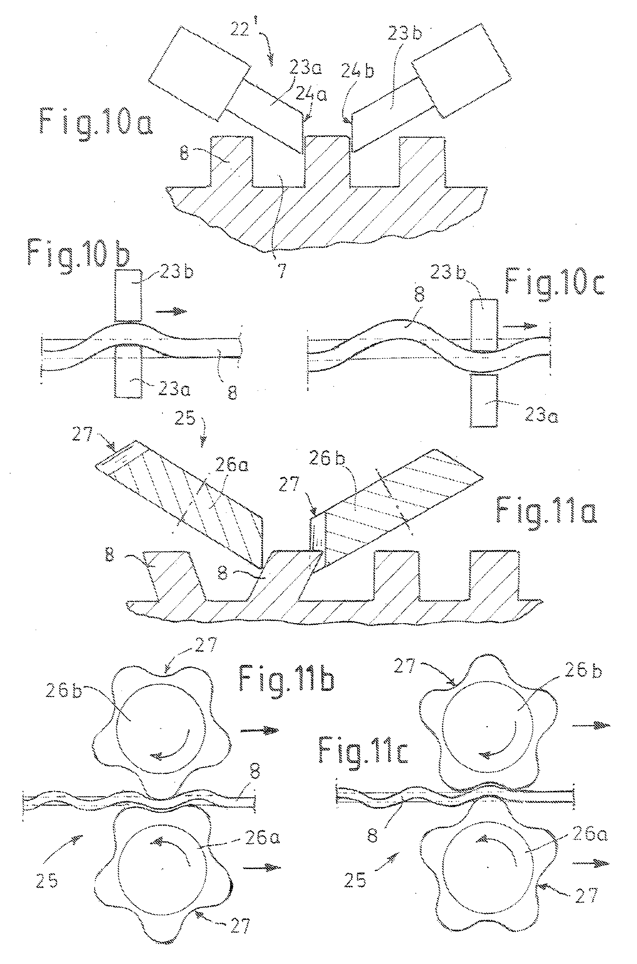

In Figur 10a ist die Schnitt durch ein Stempelwerkzeug 22' für die plastische Querverformung eines Nutsteges 8 gezeigt. Zwei Stempel 23a und 23b sind federelastisch im Stempelwerkzeug 22' gelagert und fahren abwechselnd periodisch aus, wenn sich das Stempelwerkzeug 22 entlang des Nutensteges 8 bewegt. Die Stempel 23a, b sind in Querrichtung zu den Nuten 7 geneigt angeordnet, damit die Stempelköpfe 24a, b zumindest teilweise in die Nut 7 einfahren können, um den Nutensteg 8 zu treffen. Die Stempelbewegung kann auch hier durch jeden geeigneten Aktuator oder mechanisch erzeugt werden. Die Draufsicht auf das Stempelwerkzeug 22' in Figur 10b zeigt den ausgefahrenen Stempel 23a, der den Nutensteg 8 nach oben verformt. Figur 10c zeigt - das Stempelwerkzeug 22' ist inzwischen längs des Nutensteges 8 weitergefahren - die Verformung des Nutensteges 8 nach unten durch den Stempel 23b.

Eine weitere Ausführung zur Querverformung zeigen die Figuren 11a - 11 c. Ein Doppelwalzenwerkzeug 25 weist die beiden Schrägwalzen 26a, 26b auf. Die beiden Schrägwalzen sind beidseitig des zu verformenden Nutensteges 8 angeordnet. Sie sind gegeneinander geneigt und greifen mit Ihrem welligen Umfangsprofil 27 ineinander, wobei zwischen den Schrägwalzen 26a, 26b der zu verformende Nutensteg 8 angeordnet ist. Bewegt sich das Doppelwalzenwerkzeug 25 entlang des Nutensteges 8 und drehen sich die Schrägwalzen 26a, 26b, so wird der Nutensteg 8 abwechselnd nach oben und unten gebogen, wie aus den Draufsichten in den Figuren 11b und 11c ersichtlich.

### Bezugszeichenliste

- 1: Zylinderblock (Werkstück)
- 2: Metalloberfläche
- 3: Zylinderbohrung
- 4: Werkzeugspindel
- 5: Werkzeughalter
- 6: Drehmeißel
- 7: Nut
- 8: Nutensteg
- 9: Walze
- 10: Vorsprung (der Rändelwalze)
- 11: Rillen (der Nut)
- 12: Nutflanke
- 13: Hinterschnitt
- 14: Eindrückung
- 15: Oberseite (eines Nutenstegs)
- 16: Nutenstegkante
- 17: Kegelspitze
- 18: Leitscheibe
- 19: Absätze
- 20: Vorsprung
- 21: Ausnehmung
- 22: Stempelwerkzeug
- 23: Stempel
- 24: Stempelkopf
- 25: Doppelwalzenwerkzeug
- 26: Schrägwalzen
- 27: Umfangsprofil

## Patentansprüche

1. Verfahren zum Aufrauhen von Metalloberflächen (2) zur Haftverbesserung zur von hierauf thermisch gespritzten Schichten, bei dem in einem ersten Verfahrensschritt gleichförmige Nuten (7), insbesondere Rechteck- und/oder Trapeznuten, in die Metalloberfläche (2) eingebracht werden, insbesondere durch ein Verfahren wie Drehen, Bohren, Fräsen oder Walzen, und in einem zweiten Verfahrenschritt zwischen den Nuten angeordneten Nutenstege (8) plastisch verformt werden, um Hinterschnitte (13) in den Nuten (7) auszubilden,
**dadurch gekennzeichnet, daß**
der Grad der plastischen Verformung der Nutenstege (8) in Längsrichtung der Nuten (7) sich regelmäßig ändert, indem die Nutenstege (8) in Längsrichtung durch mindestens eine der folgenden plastischen Verformungen
- Rillen (11) bzw. Rändel auf der Oberseite (15) der Nutenstege (8, 8b),
- lokale Eindrückungen (14) auf der Oberseite (15) der Nutenstege (8, 8a),
- lokale Querverformungen der Nutenstege (8, 8d) quer zur Nutenrichtung,
- lokale Eindrückungen der Nutenstegkanten (16),
regelmäßig plastisch verformt sind.

2. Verfahren nach Anspruch 1,
**dadurch gekennzeichnet, daß**
die Nuten (7) in Längsrichtung regelmäßig keine Hinterschnitte (13) aufweisen.

3. Verfahren nach einem der vorherigen Ansprüche,
**dadurch gekennzeichnet, daß**
die plastischen Verformungen durch eine sich entlang der Nuten drehendes Werkzeug, insbesondere eine Walze (9, 26) eingebracht werden.

4. Verfahren nach Anspruch 3,
**dadurch gekennzeichnet, daß**
die Walze (9) am Umfang Vorsprünge (20), Absätze (19), Spitzen (17) oder Nadeln aufweist.

5. Verfahren nach einem der vorherigen Ansprüche,
**dadurch gekennzeichnet, daß**
ein Werkzeug (22) zum Einbringen der plastischen Verformungen zumindest einen Stempel (23) aufweist.

6. Verfahren nach einem der vorherigen Ansprüche,
**dadurch gekennzeichnet, daß**
ein Werkzeug (9, 22, 25) zur Einbringung der plastischen Verformungen in einer Nut und/oder an einem Nutensteg geführt ist.

7. Verfahren nach einem der vorherigen Ansprüche,
**dadurch gekennzeichnet, daß**
die plastischen Verformungen des zweiten Verfahrensschrittes im gleichen Arbeitsgang wie der erste Verfahrensschritt eingebracht werden.

8. Werkstück mit einer Metalloberfläche (2) und einer hierauf thermisch gespritzten Schicht, bei dem vor dem Aufbringen der thermisch gespritzten Schicht in einem ersten Verfahrensschritt gleichförmige Nuten (7), insbesondere Rechteck- und/oder Trapeznuten, in die Metalloberfläche (2) eingebracht worden sind, insbesondere durch ein Verfahren wie Drehen, Bohren, Fräsen oder Walzen, und in einem zweiten Verfahrenschritt zwischen den Nuten angeordneten Nutenstege (8) plastisch verformt worden sind, um Hinterschnitte (13) in den Nuten (7) auszubilden, wobei der Grad der plastischen Verformung der Nutenstege (8) in Längsrichtung der Nuten (7) sich regelmäßig ändert, indem die Nutenstege (8) in Längsrichtung durch mindestens eine der folgenden plastischen Verformungen
- Rillen (11) bzw. Rändel auf der Oberseite (15) der Nutenstege (8, 8b),
- lokale Eindrückungen (14) auf der Oberseite (15) der Nutenstege (8, 8a),
- lokale Querverformungen der Nutenstege (8, 8d) quer zur Nutenrichtung,
- lokale Eindrückungen der Nutenstegkanten (16),
regelmäßig plastisch verformt worden sind.

9. Werkstück nach Anspruch 8, wobei es sich bei dem Werkstück um einen Zylinderblock eines Verbrennungsmotors handelt.

## Claims

1. Process for roughening metal surfaces (2) in order to improve the adhesion of layers thermally sprayed thereon, **characterized in that**, in a first process step, uniform grooves (7), in particular rectangular and/or trapezoidal grooves, are introduced into the metal surface (2), in particular by a process such as turning, drilling, milling or rolling, and, in a second process step, groove ridges (8) arranged between the grooves are plastically deformed in order to form undercuts (13) in the grooves (7),
**characterized in that**
the degree of plastic deformation of the groove ridges (8) varies regularly in the longitudinal direction of the grooves (7) by virtue of the groove ridges (8) being plastically deformed at regular intervals in the longitudinal direction by means of at least one of the following plastic deformations:
- flutes (11) or knurls on the top face (15) of the groove ridges (8, 8b),
- local indentations (14) on the top face (15) of the groove ridges (8, 8a),
- local transverse deformations of the groove ridges (8, 8d) transversely with respect to the groove direction,
- local indentations of the groove ridge edges (16).

2. Process according to Claim 1,
**characterized in that**
the grooves (7) regularly do not have any undercuts (13) in the longitudinal direction.

3. Process according to one of the preceding claims,
**characterized in that**
the plastic deformations are introduced by means of a tool which rotates along the grooves, in particular a roller (9, 26).

4. Process according to Claim 3,
**characterized in that**
the circumference of the roller (9) is provided with projections (20), shoulders (19), points (17) or needles.

5. Process according to one of the preceding claims,
**characterized in that**
a tool (22) for introducing the plastic deformations has at least one punch (23).

6. Process according to one of the preceding claims,
**characterized in that**
a tool (9, 22, 25) for introducing the plastic deformations is guided in a groove and/or on a groove ridge.

7. Process according to one of the preceding claims,
**characterized in that**
the plastic deformations in the second process step are introduced in the same operation as the first process step.

8. Workpiece having a metal surface (2) and having a layer thermally sprayed thereon, wherein, before the application of the thermally sprayed layer, in a first process step, uniform grooves (7), in particular rectangular and/or trapezoidal grooves, are introduced into the metal surface (2), in particular by a process such as turning, drilling, milling or rolling, and, in a second process step, groove ridges (8) arranged between the grooves are plastically deformed in order to form undercuts (13) in the grooves (7), wherein the degree of plastic deformation of the groove ridges (8) varies regularly in the longitudinal direction of the grooves (7) by virtue of the groove ridges (8) being plastically deformed at regular intervals in the longitudinal direction by means of at least one of the following plastic deformations:
- flutes (11) or knurls on the top face (15) of the groove ridges (8, 8b),
- local indentations (14) on the top face (15) of the groove ridges (8, 8a),
- local transverse deformations of the groove ridges (8, 8d) transversely with respect to the groove direction,
- local indentations of the groove ridge edges (16).

9. Workpiece according to Claim 8, **characterized in that** the workpiece is a cylinder block of an internal combustion engine.

## Revendications

1. Procédé pour rendre rugueuses des surfaces métalliques (2) pour améliorer l'adhérence de couches pulvérisées thermiquement sur celles-ci, dans lequel, lors d'une première étape de procédé, des rainures régulières (7), en particulier des rainures rectangulaires et/ou trapézoïdales, sont introduites dans la surface métallique (2), en particulier au moyen d'un procédé tel que le tournage, le perçage, le fraisage ou le laminage et, lors d'une deuxième étape de procédé, des nervures de rainure (8) disposées entre les rainures sont déformées plastiquement pour réaliser des contre-dépouilles (13) dans les rainures (7),
**caractérisé en ce que**
le degré de déformation plastique des nervures de rainures (8) varie de manière régulière dans la direction longitudinale des rainures (7), du fait que les nervures de rainure (8) sont déformées plastiquement de manière régulière dans la direction longitudinale par au moins l'une des déformations plastiques suivantes
- cannelures (11) ou moletages sur la face supérieure (15) des nervures de rainure (8, 8b),
- enfoncements locaux (14) sur la face supérieure (15) des nervures de rainure (8, 8a),
- déformations transversales locales des nervures de rainure (8, 8d) transversalement par rapport à la direction des rainures,
- enfoncements locaux des arêtes de nervures de rainure (16).

2. Procédé selon la revendication 1,
**caractérisé en ce que**
les rainures (7) ne présentent de manière régulière aucune contre-dépouille (13) dans la direction longitudinale.

3. Procédé selon l'une quelconque des revendications précédentes,
**caractérisé en ce que**
les déformations plastiques sont introduites par un outil tournant le long des rainures, en particulier un rouleau (9, 26).

4. Procédé selon la revendication 3,
**caractérisé en ce que**
le rouleau (9) comprend à la périphérie des saillies (30), des épaulements (19), des pointes (17) ou des aiguilles.

5. Procédé selon l'une quelconque des revendications précédentes,
**caractérisé en ce qu'**un outil (22) pour introduire les déformations plastiques comprend au moins un poinçon (23).

6. Procédé selon l'une quelconque des revendications précédentes,
**caractérisé en ce**
**qu'**un outil (9, 22, 25) pour introduire les déformations plastiques est guidé dans une rainure et/ou sur une nervure de rainure.

7. Procédé selon l'une quelconque des revendications précédentes,
**caractérisé en ce que**
les déformations plastiques de la deuxième étape de procédé sont introduites pendant la même opération que celles de la première étape de procédé.

8. Pièce pourvue d'une surface métallique (2) et d'une couche pulvérisée thermiquement sur celle-ci, dans lequel, avant l'application de la couche pulvérisée thermiquement, des rainures régulières (7), en particulier des rainures rectangulaires et/ou trapézoïdales, ont été introduites dans la surface métallique (2) lors d'une première étape de procédé, en particulier au moyen d'un procédé tel que le tournage, le perçage, le fraisage ou le laminage et, lors d'une deuxième étape de procédé, des nervures de rainure (8) disposées entre les rainures ont été déformées plastiquement, afin de réaliser des contre-dépouilles (13) dans les rainures (7), le degré de déformation plastique des nervures de rainure (8) dans la direction longitudinale des rainures (7) variant de manière régulière, du fait que les nervures de rainure (8) ont été déformées plastiquement de manière régulière dans la direction longitudinale par au moins l'une des déformations plastiques suivantes
- cannelures (11) ou moletages sur la face supérieure (15) des nervures de rainure (8, 8b),
- enfoncements locaux (14) sur la face supérieure (15) des nervures de rainure (8, 8a),
- déformations transversales locales des nervures de rainure (8, 8d) transversalement par rapport à la direction des rainures,
- enfoncements locaux des arêtes de nervures de rainure (16).

9. Pièce selon la revendication 8, la pièce étant un bloc-cylindres d'un moteur à combustion interne.
